# EUROPEAN PATENT SPECIFICATION

(11) **EP 1 833 187 B1**
(45) Date of publication and mention of the grant of the patent: **06.10.2010**
(21) Application number: 07004602.4
(22) Date of filing: 06.03.2007
(51) Int. Cl.: H04L 1/00, H04L 27/26

(54) **Method for transmitting/receiving a signal in a communication system**
Verfahren zum Senden/Empfangen eines Signals in einem Kommunikationssystem
Procédé pour la transmission/réception d'un signal dans un système de communication

(30) Priority: 06.03.2006 KR 20060020985
(43) Date of publication of application: 12.09.2007
(73) Proprietor: Samsung Electronics Co., Ltd., Suwon-si, Gyeonggi-Do (KR)
(72) Inventor: Cho, Min-Hee, Yeongtong-gu Suwon-si Gyeonggi-do (KR); Yi, Byoung-Ha, Yeongtong-gu Suwon-si Gyeonggi-do (KR); Jeong, Joong-Hoo, Yeongtong-gu Suwon-si Gyeonggi-do (KR); Hwang, In-Seok, Yeongtong-gu Suwon-si Gyeonggi-do (KR)
(74) Representative: Grünecker, Kinkeldey, Stockmair & Schwanhäusser Anwaltssozietät

(56) References cited:
- EP-A- 1 372 290
- EP-A- 1 534 039
- ISRAEL KOFFMAN ET AL: "Broadband Wireless Access Solutions Based on OFDM Access in IEEE 802.16" IEEE COMMUNICATIONS MAGAZINE, IEEE SERVICE CENTER, PISCATAWAY, US, vol. 40, no. 4, April 2002 (2002-04), pages 96-103, XP011092814 ISSN: 0163-6804
- YUN S ET AL: "Spectrum efficient region-based resource allocation with fractional loading for FH-OFDMA cellular systems" ELECTRONICS LETTERS, IEE STEVENAGE, GB, vol. 41, no. 13, 23 June 2005 (2005-06-23), pages 752-754, XP006024652 ISSN: 0013-5194

## Description

### BACKGROUND OF THE INVENTION

### 1. Field of the Invention

The present invention relates generally to a method for signal transmission in a communication system, and more particularly to a method for transmitting/receiving a DownLink (DL) signal in a communication system.

### 2. Description of the Related Art

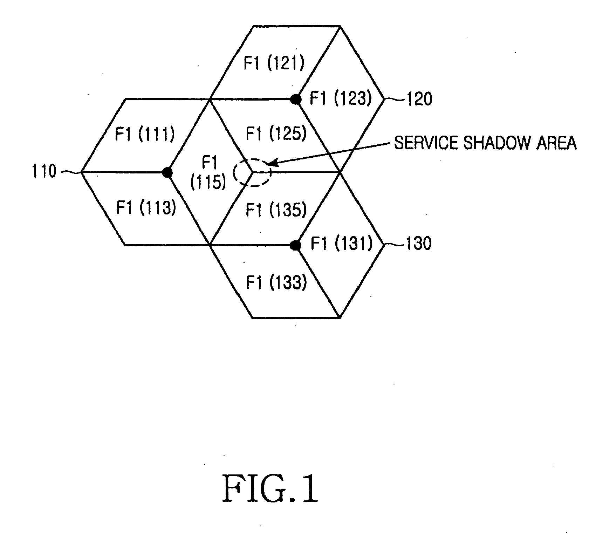

Usually, in a communication system having a cellular structure (cellular communication system), Inter-Cell Interference (ICI) occurs due to limited resources including frequency resources, code resources, and time slot resources being divided and used by a plurality of cells of the cellular communication system. The occurrence of ICI due to the use of divided frequency resources by multiple cells may degrade the performance of the cellular communication system. However, in order to increase the entire system capacity, the frequency resources may be re-used. The ratio of reuse of the frequency resources will be called a "frequency reuse factor," which is defined by the number of cells that do not use the same frequency resource. FIG. 1 illustrates the structure of a conventional cellular communication system having a frequency reuse factor of 1.

Referring to FIG. 1, the cellular communication system includes three cells including a first cell 110, a second cell 120 and a third cell 130, each of which has a 3-sector structure. Specifically, the first cell 110 includes a first sector 111, a second sector 113 and a third sector 115, the second cell 120 includes a first sector 121, a second sector 123 and a third sector 125, and the third cell 130 includes a first sector 131, a second sector 133 and a third sector 135. Further, because it is assumed that the cellular communication system has a frequency reuse factor of 1, all sectors of the first cell 110 to the third cell 130 use the same frequency resource, that is, the same Frequency Allocation (FA) F1.

Because the cells and sectors use the same FA F 1 as described above, the channel state at the cell boundary area is degraded. For example, a Carrier to Interference and Noise Ratio (CINR) is reduced to a very small value. As a result, there is a high probability that a reception error may occur even when a signal is transmitted by applying the most robust Modulation and Coding Scheme (MCS) level supportable in a corresponding cell.

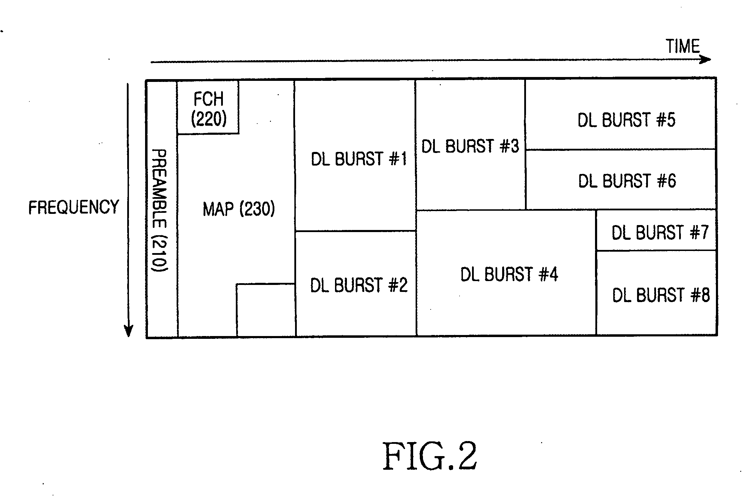

FIG. 2 illustrates a structure of a DL frame of a conventional cellular communication system.

Referring to FIG. 2, the DL frame includes a preamble field 210, a Frame Control Header (FCH) field 220, a MAP field 230 and DL burst fields including DL burst #1 to DL burst #8.

The preamble field 210 carries a preamble signal, which is used for identification of a base station and acquisition of synchronization between a transmitter such as a Base Station (BS), and a receiver such as a Mobile Station (MS). The FCH field 220 carries an FCH, which contains information about the length of the MAP field 230 and a modulation scheme applied to the MAP field 230. The FCH field 220 has a fixed size, for example, a size of 24 bits, and a fixed MCS level set in advance, for example, a Quadrature Phase Shift Keying (QPSK) 1/16 level is applied to the FCH field 220.

The MAP field 230 carries a MAP message, which contains location information about the DL burst fields and UpLink (UL) burst fields (not shown), modulation scheme information, and allocation information of the DL burst fields and the UL burst fields, that is, information about whether the DL burst fields and the UL burst fields have been exclusively allocated to a specific MS or commonly allocated to unspecified multiple MSs. The DL burst fields may be either exclusively allocated to a specific MS or commonly allocated to unspecified multiple MSs.

However, the MAP message transmitted through the MAP field 230 is indispensable information for communication between the BS and the MS. Therefore, the BS applies the most robust MCS level supportable by the BS, for example, the QPSK 1/12 level, to the MAP message. By doing so, all MSs within the BS can receive the MAP message without an error.

Meanwhile, MCS levels corresponding to the channel states of the MSs targeted by the DL burst fields are applied to the signals transmitted by the DL burst fields. That is, the BS determines MCS levels of the DL burst fields based on the channel states, that is, Channel Quality Information (CQI), fed back by the MSs targeted by the DL burst fields.

Further, when using a frequency reuse factor of 1 as described above with reference to FIG. 1, ICI is caused by a neighbor BS. The occurrence of ICI may prevent normal reception of the MAP message even when the most robust MCS level supportable by the BS is applied to the MAP message. Particularly, when there is an area incapable of normally receiving the MAP message, the area becomes a service shadow area within a corresponding BS. In the service shadow area, it is impossible to provide a service, which degrades the service stability of the entire communication system.

Therefore, the above-mentioned communication system uses a separate interference cancellation scheme, such as a Successive Interference Cancellation (SIC) scheme, in order to cancel the ICI. However, while conventional interference cancellation schemes can improve a reception capability of an MS in a cell boundary area, they also increase the complexity of the MS having a limited processing capacity. Therefore, there exists a need for a scheme for improving the reception capability while preventing the increase in the complexity of the MS.

According to EP 1 534 039 A2, a base station dynamically allocates downlink and uplink resources for each of its subscriber stations using a scheduling operation, and provides information on the allocated downlink and uplink resources to each of the subscriber stations in the form of common control information every frame. In addition, the IEEE 802.16a communication system modulates and codes a signal to be transmitted to a particular subscriber station using modulation and coding scheme appropriate for a radio ware environment, i.e. a channel state, of the subscriber station. The first information is transmitted using an MCS level having a modulation scheme with a lowest order and a coding scheme with a lowest coding rate among all MCS levels available in the base station.

The document EP 1 327 290 A1 relates to a method for selecting a modulation and coding scheme (MCS) which is to be applied to a downlink connection in a cellular radio system (para. [0001]). The disclosed method comprises: selecting from a table (MCS table) a MCS value on the basis of at least one measured radio link parameter, monitoring the at least one parameter, determining a trend of change of the at least one parameter and modifying at least one MCS value in the table taking into account the determined trend (para. [0004]).

According to the document: I Koffman, V. Roman, "Broadband Wireless Access Solutions Based on OFDM Access in IEEE 802.16", IEEE Communications Magazine, IEEE Service Center, Piscataway, US, vol. 40, no. 4, April 2002 (2002-04), pages 96 - 103, ISSN 0163-6804, an operator of a broadband wireless access system should be able to avoid situations of erratic service outages due to variable propagation or interference conditions.

### SUMMARY OF THE INVENTION

Accordingly, the present invention has been made to solve the above-mentioned problems occurring in the prior art, and the present invention provides a method for transmitting/receiving a DL signal in a communication system.

The present invention provides a method for transmitting/receiving a DL signal for improving a reception capability of an MS in a communication system.

The present invention also provides a method for transmitting/receiving a DL signal for reducing complexity of an MS in a communication system.

The present invention further provides a method for transmitting/receiving a DL signal by determining whether to use an interference cancellation scheme in accordance with a channel state in a communication system.

Further aspects of the present invention are provided in accordance with the appended claims.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates the structure of a conventional cellular communication system having a frequency reuse factor of 1;
FIG. 2 illustrates a structure of a DL frame of a conventional cellular communication system;
FIG. 3 illustrates degradation of the capability of the interference cancellation scheme in DL frame structures including MAP fields have the same size in an ordinary communication system;
FIG. 4 illustrates degradation of the capability of the interference cancellation scheme according to the MCS level when MAP fields have different sizes and DL bursts to which high MCS levels are applied are allocated based on the frequency domain in an ordinary communication system;
FIG. 5 illustrates degradation of the capability of the interference cancellation scheme according to the MCS level when MAP fields have different sizes and DL bursts to which high MCS levels are applied are allocated based on the time domain in an ordinary communication system;
FIG. 6 illustrates degradation of the capability of the interference cancellation scheme according to the MCS level when MAP fields have different sizes and DL bursts to which low MCS levels are applied are allocated based on the time domain in an ordinary communication system;
FIG. 7 illustrates a structure of a DL frame transmitted in a communication system according to an embodiment of the present invention;
FIG. 8 illustrates a process for transmitting a DL frame signal by a BS in a communication system according to an embodiment of the present invention;
FIG. 9 illustrates a process for receiving a DL frame signal by an MS in a communication system according to an embodiment of the present invention; and
FIG. 10 illustrates another example of a DL frame structure of a communication system according to an embodiment of the present invention.

### DETAILED DESCRIPTION OF THE PREFERRED EMBODIMENTS

Hereinafter, preferred embodiments of the present invention will be described with reference to the accompanying drawings. In the following description, a detailed description of known functions and configurations incorporated herein will be omitted for the sake of clarity and conciseness.

As discussed above, in order to increase the efficiency of the interference cancellation scheme, it is important to exactly detect the interference signal from the incoming signal.

However, the detection capability of the interference signal is largely influenced by the MCS level of a desired signal and the interference signal. Hereinafter, for convenience of description, the desired signal is referred to as an "original signal." Thus, a CINR of an interference signal is always the same as or lower than a CINR of the original signal, the detection capability of the interference signal is degraded when the MCS level applied to the interference signal exceeds the MCS level applied to the original signal. In contrast, when the MCS level applied to the interference signal does not exceed the MCS level applied to the original signal, the detection capability of the interference signal is improved. The degradation of the detection capability of the interference signal causes degradation of the capability of the interference cancellation scheme. Therefore, as used herein, the degradation of the detection capability of the interference signal is called degradation of the capability of the interference cancellation scheme.

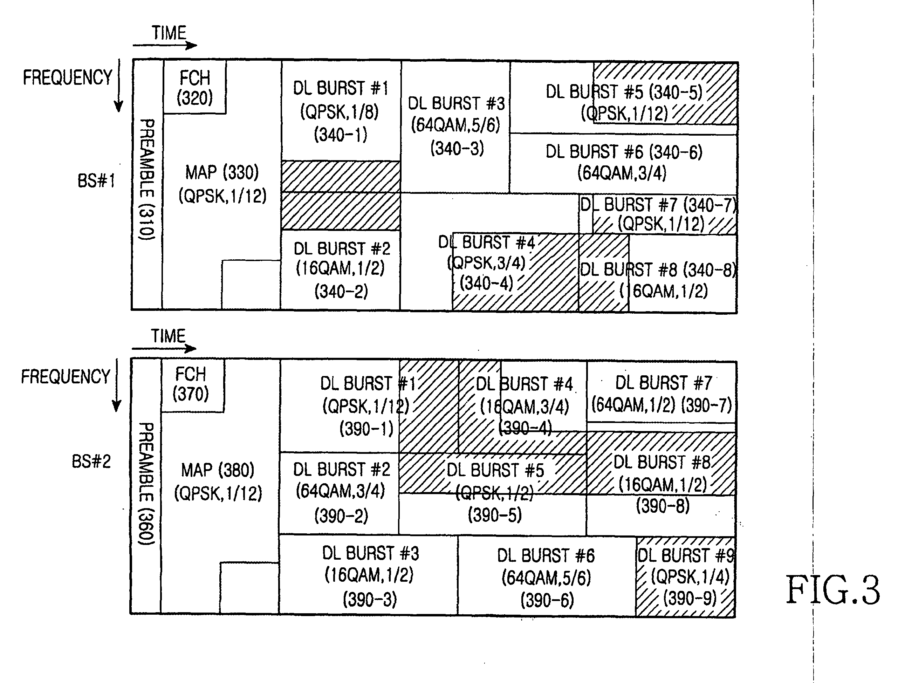

FIG. 3 illustrates degradation of the capability of the interference cancellation scheme in DL frame structures including MAP fields have the same size in an ordinary communication system.

In FIG. 3, a diagram is provided illustrating structures of DL frames of two BSs including BS #1 and BS #2 from among a plurality of BSs included in the communication system. The DL frames of BS #1 and BS #2 include MAP fields having the same size. Further, the signals transmitted by a plurality of areas included in the DL frames of BS #1 and BS #2, such as preamble fields 310 and 360, FCH fields 320 and 370, MAP fields 330 and 380 and DL burst fields 340-1 to 340-8 and 390-1 to 390-9, have the same characteristics as those described above with reference to FIG. 2, so a detailed description thereof will be omitted here.

Referring to FIG. 3, bursts to which high MCS levels are applied in the DL frame of BS #1 use the same frequency region as bursts to which low MCS levels are applied in the DL frame of BS #2, thereby generating regions as shaded in FIG. 3, in which the capability of the interference cancellation scheme is degraded. That is, areas, in which the capability of the interference cancellation scheme is degraded, are generated in DL burst #1 390-1, DL burst #4 390-4, DL burst #5 390-5, DL burst #8 390-8, and DL burst #9 390-9 of BS #2, and the reception capability of the MS receiving those DL bursts is degraded due to the capability degradation of the interference cancellation scheme.

In contrast, bursts to which high MCS levels are applied in the DL frame of BS #2 use the same frequency region as bursts to which low MCS levels are applied in the DL frame of BS #1, thereby generating regions as shaded in FIG. 3, in which the capability of the interference cancellation scheme is degraded. That is, areas, in which the capability of the interference cancellation scheme is degraded, are generated in DL burst #1 340-1, DL burst #2 340-2, DL burst #4 340-4, DL burst #6 340-6, DL burst #7 340-7, and DL burst #8 340-8 of BS #1, and the reception capability of the MS receiving those DL bursts is degraded due to the capability degradation of the interference cancellation scheme.

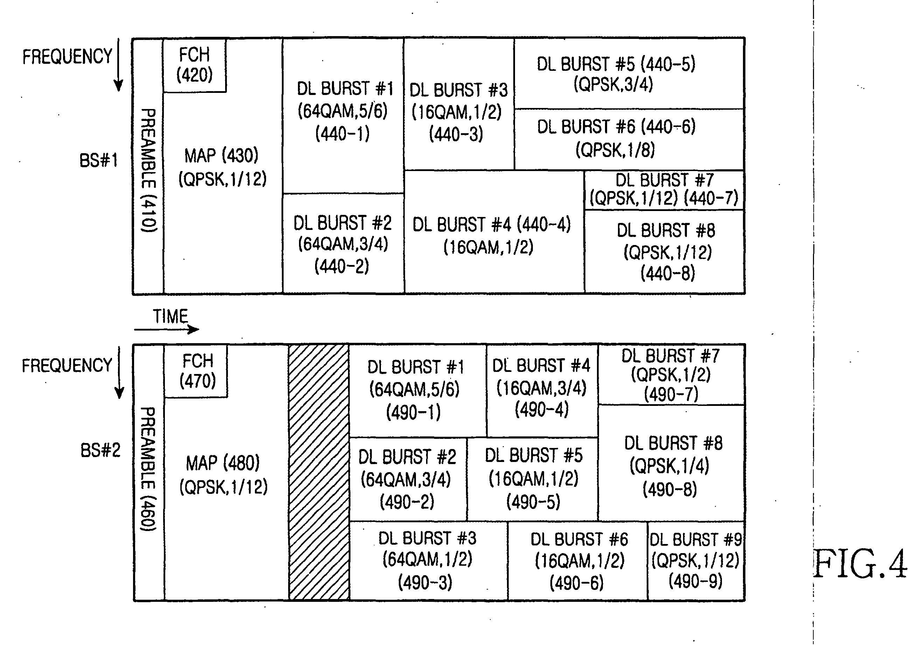

FIG. 4 illustrates degradation of the capability of the interference cancellation scheme according to the MCS level when MAP fields have different sizes and DL bursts to which high MCS levels are applied are allocated based on the frequency domain in an ordinary communication system.

In FIG. 4, a diagram is provided illustrating structures of DL frames of two BSs including BS #1 and BS #2 from among a plurality of BSs included in the communication system. Further, the signals transmitted by a plurality of areas included in the DL frames of BS #1 and BS #2, such as preamble fields 410 and 460, FCH fields 420 and 470, MAP fields 430 and 480, and DL burst fields 440-1 to 440-8 and 490-1 to 490-9, have the same characteristics as those described above with reference to FIG. 2, so a detailed description thereof will be omitted here.

The signal (i.e., MAP message) transmitted through the MAP field 430 is indispensable information for communication between BS #1 and MSs to which BS #1 provides a service, and the MAP message transmitted through the MAP field 480 is indispensable information for communication between BS #2 and MSs to which BS #2 provides a service. Therefore, BS #1 applies the most robust MCS level (e.g. QPSK 1/12 level) from among MCS levels supportable by BS #1 to the MAP message transmitted through the MAP field 430, and BS #2 also applies the most robust MCS level (e.g. QPSK 1/12 level) from among MCS levels supportable by BS #2 to the MAP message transmitted through the MAP field 480. However, the MAP fields as shown in FIG. 4 have different locations and sizes according to various parameters, such as the number of DL bursts allocated by corresponding BSs.

When the MAP fields have different locations and sizes as described above, specifically, when the MAP field 430 of BS #1 has a size and a location different from those of the MAP field 480 of BS #2, if the DL bursts are allocated to the DL frame according to a sequence in which a DL burst having the highest MCS level based on the frequency domain is allocated prior to the other DL bursts, high MCS levels are applied to DL burst #1 440-1 and DL burst #2 440-2 of BS #1, so that an interference cancellation scheme capability degradation area is generated in the MAP field 480 of BS #2. As a result, the interference cancellation scheme capability degradation area generated in the MAP field 480 of BS #2 increases the probability of occurrence of the service shadow area.

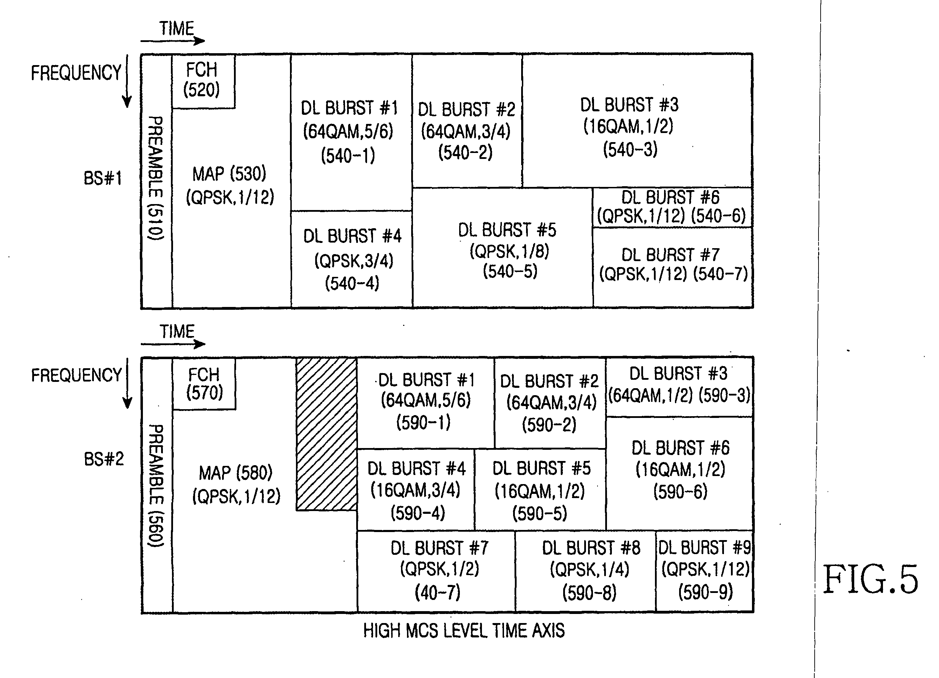

FIG. 5 illustrates degradation of the capability of the interference cancellation scheme according to the MCS level when MAP fields have different sizes and DL bursts to which high MCS levels are applied are allocated based on the time domain in an ordinary communication system.

In FIG. 5, a diagram is provided illustrating structures of DL frames of two BSs including BS #1 and BS #2 from among a plurality of BSs included in the communication system. Further, the signals transmitted by a plurality of areas included in the DL frames of BS #1 and BS #2, such as preamble fields 510 and 560, FCH fields 520 and 570, MAP fields 530 and 580, and DL burst fields 540-1 to 540-8 and 590-1 to 590-9, have the same characteristics as those described above with reference to FIG. 2, so a detailed description thereof will be omitted here.

The signal (i.e., MAP message) transmitted through the MAP field 530 is indispensable information for communication between BS #1 and MSs to which BS #1 provides a service, and the MAP message transmitted through the MAP field 580 is indispensable information for communication between BS #2 and MSs to which BS #2 provides a service. Therefore, BS #1 applies the most robust MCS level (e.g. QPSK 1/12 level) from among MCS levels supportable by BS #1 to the MAP message transmitted through the MAP field 530, and BS #2 also applies the most robust MCS level (e.g. QPSK 1/12 level) from among MCS levels supportable by BS #2 to the MAP message transmitted through the MAP field 580. However, the MAP fields as shown in FIG. 5 have different locations and sizes according to various parameters, such as the number of DL bursts allocated by corresponding BSs.

When the MAP fields have different locations and sizes as described above, specifically, when the MAP field 530 of BS #1 has a size and a location different from those of the MAP field 580 of BS #2, if the DL bursts are allocated to the DL frame according to a sequence in which a DL burst having the highest MCS level based on the time domain is allocated prior to the other DL bursts, MCS levels, which are still high but lower than those when the DL bursts are allocated to the DL frame according to a sequence in which a DL burst having the highest MCS level based on the frequency domain is allocated prior to the other DL bursts as described above with reference to FIG. 4, are applied to DL burst # 1 540-1 and DL burst #4 540-4 of BS #1. Thus, an interference cancellation scheme capability degradation area is generated in the MAP field 580 of BS #2. As a result, the interference cancellation scheme capability degradation area generated in the MAP field 580 of BS #2 increases the probability of occurrence of the service shadow area.

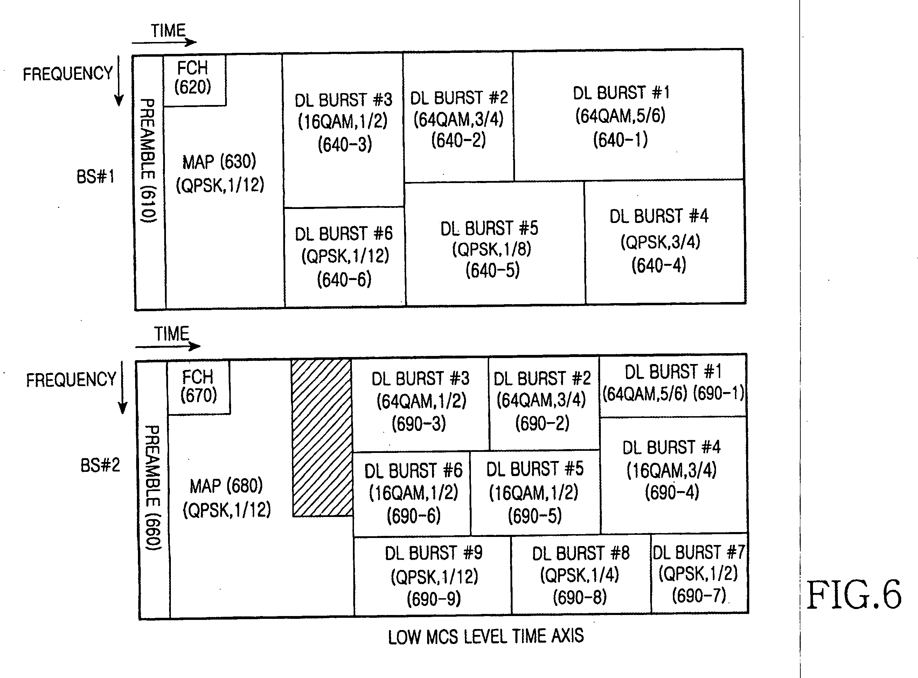

FIG. 6 illustrates degradation of the capability of the interference cancellation scheme according to the MCS level when MAP fields have different sizes and DL bursts to which low MCS levels are applied are allocated based on the time domain in an ordinary communication system.

In FIG. 6, a diagram is provided illustrating structures of DL frames of two BSs including BS #1 and BS #2 from among a plurality of BSs included in the communication system. Further, the signals transmitted by a plurality of areas included in the DL frames of BS #1 and BS #2, such as preamble fields 610 and 660, FCH fields 620 and 670, MAP fields 630 and 680, and DL burst fields 640-1 to 640-6 and 690-1 to 690-9, have the same characteristics as those described above with reference to FIG. 2, so a detailed description thereof will be omitted here.

The signal (i.e., MAP message) transmitted through the MAP field 630 is indispensable information for communication between BS #1 and MSs to which BS #1 provides a service, and the MAP message transmitted through the MAP field 680 is indispensable information for communication between BS #2 and MSs to which BS #2 provides a service. Therefore, BS #1 applies the most robust MCS level (e.g. QPSK 1/12 level) from among MCS levels supportable by BS #1 to the MAP message transmitted through the MAP field 630, and BS #2 also applies the most robust MCS level (e.g. QPSK 1/12 level) from among MCS levels supportable by BS #2 to the MAP message transmitted through the MAP field 680. However, the MAP fields as shown in FIG. 6 have different locations and sizes according to various parameters, such as the number of DL bursts allocated by corresponding BSs.

When the MAP fields have different locations and sizes as described above, specifically, when the MAP field 630 of BS #1 has a size and a location different from those of the MAP field 680 of BS #2, if the DL bursts are allocated to the DL frame according to a sequence in which a DL burst having the lowest MCS level based on the time domain is allocated prior to the other DL bursts, high MCS levels are applied to DL burst #3 640-3 and DL burst #6 640-6 of BS #1, so that an interference cancellation scheme capability degradation area is generated in the MAP field 680 of BS #2. As a result, the interference cancellation scheme capability degradation area generated in the MAP field 680 of BS #2 increases the probability of occurrence of the service shadow area.

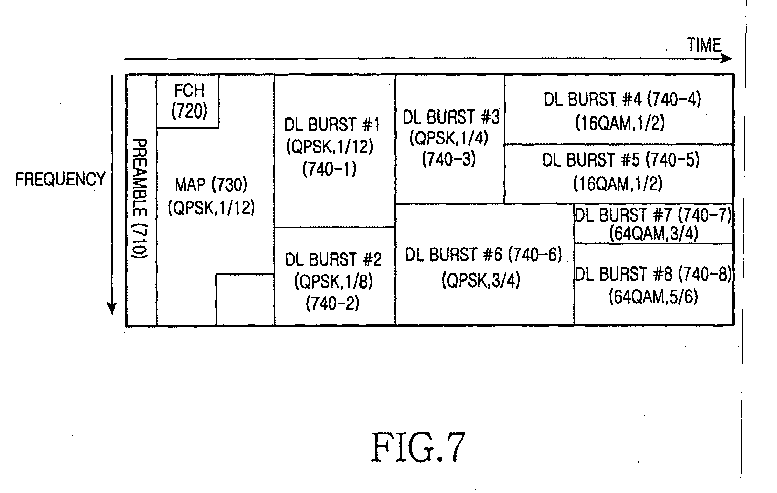

From the above description with reference to FIGs. 3 to 6, it is noted that the interference cancellation scheme capability is degraded when an MCS level exceeding the MCS level applied to the original signal is applied to the interference signal. Therefore, it is possible to improve the capability of detecting an interference signal, by setting an MCS level applied to the interference signal to be lower than the MCS level applied to the original signal. Therefore, the present invention transmits a DL signal while setting an MCS level applied to the interference signal to be lower than the MCS level applied to the original signal, which will be described hereinafter with reference to FIG. 7.

FIG. 7 illustrates a structure of a DL frame transmitted in a communication system according to an embodiment of the present invention.

The signals transmitted by a preamble field 710, an FCH field 720, a MAP field 730 and DL burst fields 740-1 to 740-8 have the same characteristics as those described above with reference to FIG. 2, so a detailed description thereof will be omitted here.

In the example of a DL frame structure as illustrated in FIG. 7, DL bursts are allocated to the DL frame according to a sequence in which a DL burst having the lowest MCS level based on the frequency domain is allocated prior to the other DL bursts. That is, because the communication system uses a frequency reuse factor of 1, all BSs included in the communication system use the same frequency resources. Therefore, all BSs included in the communication system sequentially arrange the preamble field 710, the FCH field 720 and the MAP field 730, and apply the most robust MCS level from among MCS levels supportable by the BSs to the MAP field 730. Therefore, the DL burst fields after the MAP field 730 are allocated in a sequence in which a DL burst field having a lowest MCS level based on the frequency domain is placed prior to the other DL bursts, to thereby prevent an interference cancellation scheme capability degradation area from being generated in the MAP field 730. That is, in a DL frame according to the present invention, DL burst fields having MCS levels nearest to the MCS levels applied to the MAP field 730, that is, DL burst fields having MCS levels showing the smallest difference from the MCS levels applied to the MAP field 730, are arranged based on the frequency domain, thereby preventing an interference cancellation scheme capability degradation area from being generated in the MAP field 730.

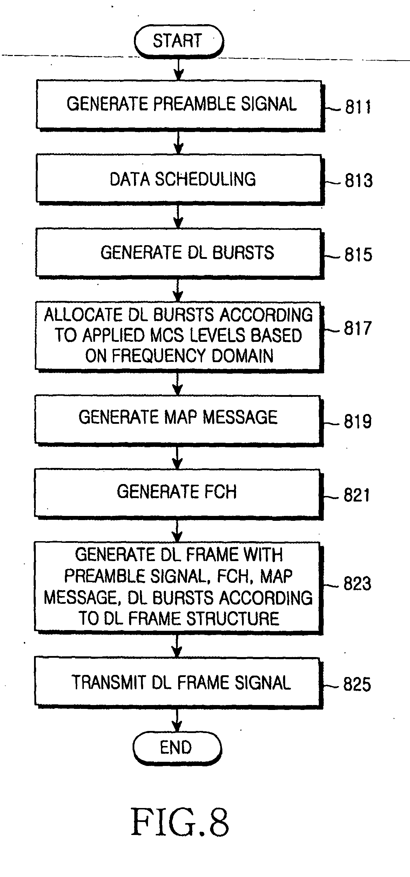

FIG. 8 illustrates a process for transmitting a DL frame signal by a BS in a communication system according to an embodiment of the present invention.

Referring to FIG. 8, a BS generates a preamble signal in step 811. In step 813, the BS schedules data to be transmitted in a corresponding DL frame interval according to a scheduling scheme in consideration of such parameters as the channel state and the priority, fed back from MSs to which the BS provides a service. The channel state can be identified through, for example, Channel Quality Information (CQI). Further, the scheduling scheme may be one of various scheduling schemes, such as a Maximum Carrier to Interference ratio (Max C/I) scheme, a Maximum Fairness (MF) scheme and a Proportional Fairness (PF) scheme.

In step 815, the BS generates DL bursts in accordance with a result of the scheduling. In step 817, the BS allocates the generated DL bursts to the DL frame based on the frequency domain in accordance with applied MCS levels. In step 819, the BS generates a MAP message in accordance with the allocated DL bursts. In step 821, the BS generates an FCH in accordance with the MAP message.

In step 823, the BS generates a DL frame including the generated preamble signal, FCH, MAP messages and DL bursts in accordance with the DL burst frame structure of the communication system. In step 825, the BS transmits the generated DL frame signal to MSs.

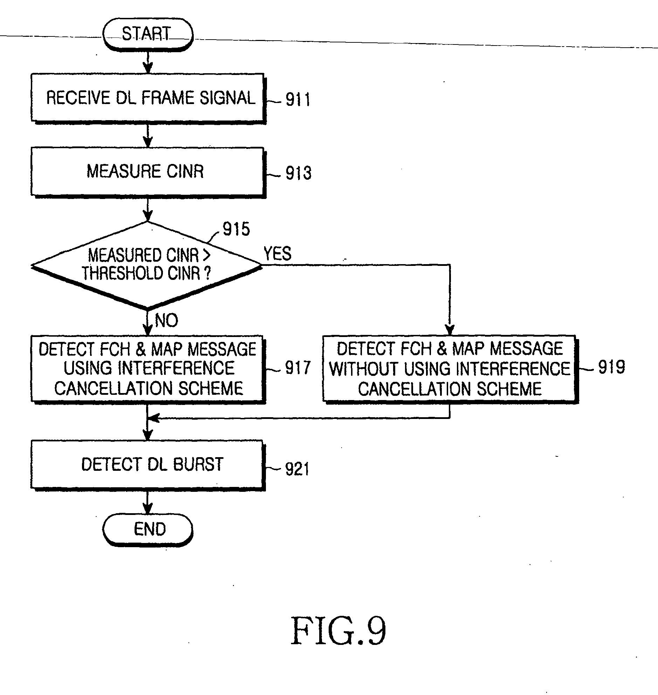

FIG. 9 illustrates a process for receiving a DL frame signal by an MS in a communication system according to an embodiment of the present invention.

Referring to FIG. 9, in step 911, the MS receives a DL frame signal transmitted from the BS. In step 913, the MS detects a preamble signal from the received DL frame signal, and measures a CINR of the detected preamble signal in order to measure the channel state of the MS. In step 915, the MS examines whether the measured CINR exceeds a threshold CINR, which is a minimum CINR necessary for detection of FCH and MAP messages included in the DL frame signal by the MS. That is, when the measured CINR exceeds the threshold CINR, which implies that the channel state is relatively good, the MS detects the FCH and MAP messages without using the interference cancellation scheme in order to reduce the complexity. In contrast, when the measured CINR does not exceed the threshold CINR, which implies that the channel state is relatively bad, the MS detects the FCH and MAP messages by using the interference cancellation scheme.

When the measured CINR does not exceed the threshold CINR, the MS proceeds to step 917, in which the MS detects the FCH and MAP messages by using an interference cancellation scheme, such as an SIC scheme, and then proceeds to step 921. In contrast, when the measured CINR exceeds the threshold CINR, the MS proceeds to step 919, in which the MS detects the FCH and MAP messages without using an interference cancellation scheme, and then proceeds to step 921. In step 921, when there is a DL burst allocated to the MS itself in accordance with the detected MAP message, the MS detects the DL burst and then ends the process.

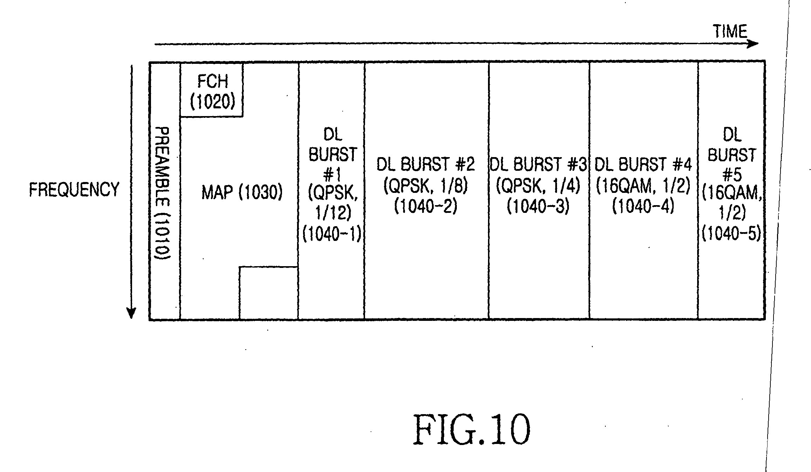

FIG. 10 illustrates another example of a DL frame structure of a communication system according to an embodiment of the present invention.

In the DL frame structure shown in FIG. 7, multiple DL burst fields having different frequency regions are allocated to the same time region. However, in the DL frame structure shown in FIG. 10, multiple DL burst fields are allocated while giving a priority to the frequency domain, so that one DL burst field is allocated to the same time region. Similarly to the DL frame shown in FIG. 7, in the DL frame structure shown in FIG. 10, a DL burst field having a lower MCS level is allocated to a DL burst field nearer to the MAP field 1030, thereby preventing occurrence of an interference cancellation scheme capability degradation area in the MAP field of a neighbor cell.

According to the present invention as described above, a BS of a communication system transmits/receives a DL signal in consideration of ICI, thereby preventing degradation of the reception capability of the MS. Further, according to the present invention, an MS of a communication system can process a received DL signal by determining whether to use an interference cancellation scheme in accordance with its own channel state, thereby minimizing increase in the complexity and improving the reception capability.

While the invention has been shown and described with reference to certain exemplary embodiments thereof, it will be understood by those skilled in the art that various changes in form and details may be made therein without departing from the scope of the invention as defined by the appended claims.

## Claims

1. A method for transmitting a downlink signal by a base station in a communication system, the method comprising the steps of:
generating a plurality of downlink signals (1040-1, 1040-2, 1040-3, 1040-4, 1040-5) to which different Modulation and Coding Scheme MCS levels are applied;
**characterized by**
transmitting a downlink signal having a first MCS level applied thereto, and then transmitting the downlink signals in a sequence in which a downlink signal having an MCS level showing a smallest difference between its MCS level and the first MCS level is transmitted prior to transmission of remaining downlink signals.

2. The method as claimed in claim 1, wherein the downlink signals are transmitted in such a manner that the downlink signals are arranged based on a frequency domain in a sequence in which the downlink signal having the first MCS level is first located and then a downlink signal having an MCS level showing a smallest difference between its MCS level and the first MCS level is located prior to transmission of remaining downlink signals.

3. The method as claimed in claim 1, wherein the communication system has a frequency reuse factor of 1.

4. The method as claimed in claim 1, wherein the first MCS level is a lowest MCS level from among MCS levels supportable by the base station.

5. A method for receiving a downlink signal by a mobile station in a communication system, the method comprising the steps of:
receiving a downlink frame signal including a plurality of downlink signals (1040-1, 1040-2, 1040-3, 1040-4, 1040-5) to which different Modulation and Coding Scheme, MCS levels are applied;
detecting a channel state from the downlink frame signal;
**characterized by**
detecting the downlink signals from the downlink frame signal by determining whether to use an interference cancellation scheme in accordance with the channel state;
wherein the downlink frame signal is generated by transmitting a downlink signal having a first MCS level applied thereto, and then transmitting the downlink signals in a sequence in which a downlink signal having an MCS level showing a smallest difference between its MCS level and the first MCS level is transmitted prior to remaining downlink signals.

6. The method as claimed in claim 5, wherein, in the downlink frame signal, the downlink signals are arranged based on a frequency domain in a sequence in which the downlink signal having the first MCS level is located first and then a downlink signal having an MCS level showing a smallest difference between its MCS level and the first MCS level is located prior to transmission of remaining downlink signals.

7. The method as claimed in claim 5, wherein the channel state is detected by measuring a Carrier to Interference and Noise Ratio CINR.

8. The method as claimed in claim 5, wherein the downlink signals are detected without using the interference cancellation scheme when the measured CINR does not exceed the threshold CINR, and are detected by using the interference cancellation scheme when the measured CINR exceeds the threshold CINR.

9. The method as claimed in claim 5, wherein the communication system has a frequency reuse factor of 1.

10. The method as claimed in claim 5, wherein the first MCS level is a lowest MCS level from among MCS levels supportable by the base station.

11. The method as claimed in claim 6, wherein the first MCS level is a lowest MCS level from among MCS levels supportable by the base station.

12. A method for transmitting a downlink signal by a base station in a communication system, the method comprising the steps of:
generating a preamble signal (710);
generating downlink bursts (740-1, 740-2, 740-3, 740-4, 740-5, 740-6, 740-7, 740-8) by scheduling data to be transmitted in a corresponding downlink frame interval;
allocating the downlink bursts to a downlink frame in accordance with Modulation and Coding Scheme MCS levels to be applied to the downlink bursts;
generating a MAP message (730) in accordance with the allocated downlink bursts;
generating a frame control header (720) in accordance with the MAP message; arid generating a downlink frame signal including the preamble signal, the frame control header, the MAP message, and the downlink bursts, and then transmitting the downlink frame signal;
**characterized in that,**
the downlink signals are allocated in such a manner that the downlink signals are arranged based on a frequency domain in a sequence in which the downlink signal having the first MCS level is located and then a downlink signal having an MCS level showing a smallest difference between its MCS level and the first MCS level is located prior to location of remaining downlink signals.

13. The method as claimed in claim 12, wherein the downlink bursts are allocated to the downlink frame so that a downlink signal having a first MCS level applied thereto is first transmitted, and the downlink signals are then transmitted in a sequence in which a downlink signal having an MCS level showing a smallest difference between its MCS level and the first MCS level is transmitted prior to transmission of remaining downlink signals.

14. The method as claimed in claim 12, wherein the communication system has a frequency reuse factor of 1.

15. The method as claimed in claim 12, wherein the first MCS level is a lowest MCS level from among MCS levels supportable by the base station.

16. A method for receiving a downlink signal by a mobile station in a communication system, the method comprising the steps of:
receiving a downlink frame signal including a preamble signal (710), a frame control header (720), a MAP message (730), and a plurality of downlink bursts (740-1, 740-2, 740-3, 740-4, 740-5, 740-6, 740-7, 740-8),
detecting a channel state from the preamble signal;
**characterized by**
detecting the frame control header (720) and the MAP message (730) by determining whether to use an interference cancellation scheme in accordance with the channel state;
wherein, in the downlink frame signal, the downlink signals are arranged based on a frequency domain in a sequence in which the downlink signal having the first MCS level is located first and then a downlink signal having an MCS level showing a smallest difference between its MCS level and the first MCS level is located prior to location of remaining downlink signals.

17. The method as claimed in claim 16, wherein the downlink frame signal is generated by transmitting a downlink signal having a first MCS level applied thereto, and then transmitting the downlink signals in a sequence in which a downlink signal having an MCS level showing a smallest difference between its MCS level and the first MCS level is transmitted prior to transmission of remaining downlink signals.

18. The method as claimed in claim 16, wherein the channel state is detected by measuring a Carrier to Interference and Noise Ratio CINR.

19. The method as claimed in claim 18, wherein the downlink signals are detected without using the interference cancellation scheme when the measured CINR does not exceed the threshold CINR, and are detected by using the interference cancellation scheme when the measured CINR exceeds the threshold CINR.

20. The method as claimed in claim 16, wherein the communication system has a frequency reuse factor of 1.

21. The method as claimed in claim 17, wherein the first MCS level is a lowest MCS level from among MCS levels supportable by the base station.

22. The method as claimed in claim 16, wherein the first MCS level is a lowest MCS level from among MCS levels supportable by the base station.

## Patentansprüche

1. Verfahren zum Senden eines Downlink-Signals durch eine Basisstation in einem Kommunikationssystem, wobei das Verfahren die folgenden Schritte umfasst:
Erzeugen einer Vielzahl von Downlink-Signalen (1040-1, 1040-2, 1040-3, 1040-4, 1040-5), auf die verschiedene MCS-Stufen (Modulation and Coding Scheme Levels) angewendet werden;
**gekennzeichnet durch**
Senden eines Downlink-Signals, auf das eine erste MCS-Stufe angewendet wird, und anschließend Senden der Downlink-Signale in einer Sequenz, in der ein Downlink-Signal, das eine MCS-Stufe hat, die eine kleinste Differenz zwischen seiner MCS-Stufe und der ersten MCS-Stufe aufweist, vor dem Senden verbleibender Downlink-Signale gesendet wird.

2. Verfahren nach Anspruch 1, wobei die Downlink-Signale so gesendet werden, dass die Downlink-Signale auf Basis einer Frequenzdomäne in einer Sequenz angeordnet werden, in der das Downlink-Signal, das die erste MCS-Stufe hat, zuerst positioniert wird und dann ein Downlink-Signal, das eine MCS-Stufe hat, die eine kleinste Differenz zwischen seiner MCS-Stufe und der ersten MCS-Stufe aufweist, vor dem Senden verbleibender Downlink-Signale positioniert wird.

3. Verfahren nach Anspruch 1, wobei das Kommunikationssystem einen Frequenzwiederverwendungsfaktor von 1 hat.

4. Verfahren nach Anspruch 1, wobei die erste MCS-Stufe eine niedrigste MCS-Stufe von MCS-Stufen ist, die durch die Basisstation unterstützt werden können.

5. Verfahren zum Empfangen eines Downlink-Signals durch eine Mobilstation in einem Kommunikationssystem, wobei das Verfahren die folgenden Schritte umfasst:
Empfangen eines Downlink-Frame-Signals, das eine Vielzahl von Downlink-Signalen (1040-1, 1040-2, 1040-3, 1040-4, 1040-5) enthält, auf die verschiedene MCS-Stufen (Modulation Coding Scheme Levels) angewendet werden;
Erfassen eines Kanalzustandes aus dem Dowlink-Frame-Signal;
**gekennzeichnet durch**
Erfassen der Downlink-Signale aus dem Downlink-Frame-Signal, indem entsprechend dem Kanalzustand festgestellt wird, ob ein Interferenzunterdrückungs-Schema eingesetzt wird;
wobei das Downlink-Frame-Signal erzeugt wird, indem ein Downlink-Signal gesendet wird, auf das eine erste MCS-Stufe angewendet wird, und dann die Downlink-Signale in einer Sequenz gesendet werden, in der ein Downlink-Signal, das eine erste MCS-Stufe hat, die eine kleinste Differenz zwischen seiner MCS-Stufe und der ersten MCS-Stufe aufweist, vor verbleibenden Downlink-Signalen gesendet wird.

6. Verfahren nach Anspruch 5, wobei in dem Downlink-Frame-Signal die Downlink-Signale auf Basis einer Frequenzdomäne in einer Sequenz angeordnet werden, in der das Downlink-Signal, das die erste MCS-Stufe hat, zuerst positioniert wird und dann ein Downlink-Signal, das eine MCS-Stufe hat, die eine kleinste Differenz zwischen seiner MCS-Stufe und der ersten MCS-Stufe aufweist, vor dem Senden verbleibender Downlink-Signale positioniert wird.

7. Verfahren nach Anspruch 5, wobei der Kanalzustand erfasst wird, indem ein Intermodulations-Rausch-Summenabstand (Carrier to Interference and Noise Ratio - CINR) gemessen wird.

8. Verfahren nach Anspruch 5, wobei die Downlink-Signale ohne Verwendung des Interferenzunterdrückungs-Schemas erfasst werden, wenn der gemessene Intermodulations-Rausch-Summenabstand den Schwellen-Intermodulations-Rausch-Summenabstand nicht überschreitet, und unter Verwendung des Interferenzunterdrückungs-Schemas erfasst werden, wenn der gemessene Intermodulations-Rausch-Summenabstand den Schwellen-Intermodulations-Rausch-Summenabstand überschreitet.

9. Verfahren nach Anspruch 5, wobei das Kommunikationssystem einen Frequenzwiederverwendungsfaktor von 1 hat.

10. Verfahren nach Anspruch 5, wobei die erste MCS-Stufe eine niedrigste MCS-Stufe von MCS-Stufen ist, die durch die Basisstation unterstützt werden können.

11. Verfahren nach Anspruch 6, wobei die erste MCS-Stufe eine niedrigste MCS-Stufe von MCS-Stufen ist, die durch die Basisstation unterstützt werden können.

12. Verfahren zum Senden eines Downlink-Signals durch eine Basisstation in einem Kommunikationssystem, wobei das Verfahren die folgenden Schritte umfasst:
Erzeugen eines Präambel-Signals (710);
Erzeugen von Downlink-Bursts (740-1, 740-2, 740-3, 740-4, 40-5, 740-6, 740-7, 740-8) mittels Scheduling in einem entsprechenden Downlink-Frame-Intervall zu sendender Daten;
Zuweisen der Downlink-Bursts zu einem Downlink-Frame entsprechend auf die Downlink-Bursts anzuwendender MCS-Stufen (Mutation and Coding Scheme Levels, MCS);
Erzeugen einer MAP-Nachricht (730) entsprechend den zugewiesenen Downlink-Bursts;
Erzeugen eines Frame-Steuer-Headers (720) entsprechend der MAP-Nachricht; und
Erzeugen eines Downlink-Frame-Signals, das das Präambel-Signal, den Frame-Steuer-Header, die MAP-Nachricht und die Downlink-Bursts enthält, und dann Senden des Downlink-Frame-Signals;
**dadurch gekennzeichnet, dass**
die Downlink-Signale so zugewiesen werden, dass die Downlink-Signale auf Basis einer Frequenz-Domäne in einer Sequenz angeordnet werden, in der das Downlink-Signal, das die erste MCS-Stufe hat, positioniert wird und dann ein Downlink-Signal, das eine MCS-Stufe hat, die eine kleinste Differenz zwischen seiner MCS-Stufe und
der ersten MCS-Stufe aufweist, vor Positionierung verbleibender Downlink-Signale positioniert wird.

13. Verfahren nach Anspruch 12, wobei die Downlink-Bursts dem Downlink-Frame so zugewiesen werden, dass ein Downlink-Signal, auf das eine erste MCS-Stufe angewendet wird, zuerst gesendet wird und die Downlink-Signale dann in einer Sequenz gesendet werden, in der ein Downlink-Signal, das eine MCS-Stufe hat, die eine kleinste Differenz zwischen seiner MCS-Stufe und der ersten MCS-Stufe aufweist, vor dem Senden verbleibender Downlink-Signale gesendet wird.

14. Verfahren nach Anspruch 12, wobei das Kommunikationssystem einen Frequenzwiederverwendungsfaktor von 1 hat.

15. Verfahren nach Anspruch 12, wobei die erste MCS-Stufe eine niedrigste MCS-Stufe von MCS-Stufen ist, die durch die Basisstation unterstützt werden können.

16. Verfahren zum Empfangen eines Downlink-Signals durch eine Mobilstation in einem Kommunikationssystem, wobei das Verfahren die folgenden Schritte umfasst:
Empfangen eines Downlink-Frame-Signals, das ein Präambel-Signal (710), einen Frame-Steuer-Header (720), eine MAP-Nachricht (730) und eine Vielzahl von Downlink-Bursts (740-1, 740-2, 740-3, 740-4, 740-5, 740-6, 740-8) enthält,
Erfassen eines Kanalzustandes aus dem Präambel-Signal;
**gekennzeichnet durch**
Erfassen des Frame-Steuer-Headers (720) und der MAP-Nachricht (730), indem entsprechend dem Kanalzustand festgestellt wird, ob ein Interferenzunterdrückungs-Schema verwendet wird;
wobei in dem Downlink-Frame-Signal die Downlink-Signale auf Basis einer Frequenzdomäne in einer Sequenz angeordnet sind, in der das Downlink-Signal, das die erste MCS-Stufe hat, zuerst positioniert wird und dann ein Downlink-Signal, das eine MCS-Stufe hat, die eine niedrigste Differenz zwischen seiner MCS-Stufe und der ersten MCS-Stufe aufweist, vor Positionierung verbleibender Downlink-Signale positioniert wird.

17. Verfahren nach Anspruch 16, wobei das Downlink-Frame-Signal erzeugt wird, indem ein Downlink-Signal gesendet wird, auf das eine erste MCS-Stufe angewendet wird, und dann die Downlink-Signale in einer Sequenz gesendet werden, in der ein Downlink-Signal, das eine MCS-Stufe hat, die eine kleinste Differenz zwischen seiner MCS-Stufe und der ersten MCS-Sufe aufweist, vor dem Senden verbleibender Downlink-Signale gesendet wird.

18. Verfahren nach Anspruch 16, wobei der Kanalzustand erfasst wird, indem ein Intermodulations-Rausch-Summenabstand (Carrier to Interference and Noise Ratio - CINR) gemessen wird.

19. Verfahren nach Anspruch 18, wobei die Downlink-Signale ohne Verwendung des Interferenzunterdrückungs-Schemas erfasst werden, wenn der gemessene Intermodulations-Rausch-Summenabstand den Schwellen-Intermodulations-Rausch-Summenabstand nicht überschreitet, und unter Verwendung des Interferenzunterdrückungs-Schemas erfasst werden, wenn der gemessene Intermodulations-Rausch-Summenabstand den Schwellen-Intermodulations-Rausch-Summenabstand überschreitet.

20. Verfahren nach Anspruch 16, wobei das Kommunikationssystem einen Frequenzwiederverwendungsfaktor von 1 hat.

21. Verfahren nach Anspruch 17, wobei die erste MCS-Stufe eine niedrigste MCS-Stufe von MCS-Stufen ist, die durch die Basisstation unterstützt werden können.

22. Verfahren nach Anspruch 16, wobei die erste MCS-Stufe eine niedrigste MCS-Stufe von MCS-Stufen ist, die durch die Basisstation unterstützt werden können.

## Revendications

1. Procédé de transmission d'un signal de liaison descendante par une station de base dans un système de communication, le procédé comprenant les étapes consistant à :
générer une pluralité de signaux de liaison descendante (1040-1, 1040-2, 1040-3, 1040-4, 1040-5, auxquels sont appliqués différents niveaux de schéma de modulation et de codage, soit Modulation and Coding Scheme ou MCS ;
**caractérisé par**
la transmission d'un signal de liaison descendante auquel est appliqué un premier niveau MCS, suivie par la transmission des signaux de liaison descendante selon une séquence dans laquelle un signal de liaison descendante qui possède un niveau MCS montrant la plus petite différence entre ce niveau MCS et le premier niveau MCS est transmis avant la transmission des signaux de liaison descendante restants.

2. Procédé selon la revendication 1, dans lequel les signaux de liaison descendante sont transmis de telle manière que les signaux de liaison descendante sont agencés en fonction d'un domaine de fréquence, selon une séquence dans laquelle le signal de liaison descendante ayant le premier niveau MCS est d'abord localisé, puis un signal de liaison descendante qui possède un niveau MCS montrant la plus petite différence entre le niveau MCS et le premier niveau MCS est localisé avant la transmission des signaux de liaison descendante restants.

3. Procédé selon la revendication 1, dans lequel le système de communication présente un facteur de réutilisation de fréquence de 1.

4. Procédé selon la revendication 1, dans lequel le premier niveau MCS est le niveau MCS le plus faible parmi les niveaux MCS pris en charge par la station de base.

5. Procédé de réception d'un signal de liaison descendante par une station de base dans un système de communication, le procédé comprenant les étapes consistant à :
recevoir un signal de trame de liaison descendante comprenant une pluralité de signaux de liaison descendante (1040-1, 1040-2, 1040-3, 1040-4, 1040-5) auxquels différents niveaux de schéma de modulation et de codage MCS sont appliqués ;
détecter un état de canal à partir du signal de trame de liaison descendante ;
**caractérisé par**
la détection des signaux de liaison descendante à partir du signal de trame de liaison descendante en déterminant s'il faut utiliser ou non un schéma de suppression d'interférence en fonction de l'état du canal;
dans lequel le signal de trame de liaison descendante est généré en transmettant un signal de liaison descendante auquel un premier niveau MCS est appliqué, puis en transmettant les signaux de liaison descendante selon une séquence dans laquelle un signal de liaison descendante ayant un niveau MCS montrant la plus petite différence entre ce niveau MCS et le premier niveau MCS est transmis avant les signaux de liaison descendante restants.

6. Procédé selon la revendication 5, dans lequel, dans le signal de trame de liaison descendante, les signaux de liaison descendante sont agencés en fonction d'un domaine de fréquence, selon une séquence dans laquelle le signal de liaison descendante ayant le premier niveau MCS est d'abord localisé, puis un signal de liaison descendante ayant un niveau MCS montrant la plus petite différence entre ce niveau MCS et le premier niveau MCS est localisé avant de transmettre les signaux de liaison descendante restants.

7. Procédé selon la revendication 5, dans lequel l'état du canal est détecté en mesurant un rapport porteuse à interférence plus bruit, soit Carrier to Interference and Noise Ratio ou CINR.

8. Procédé selon la revendication 5, dans lequel les signaux de liaison descendante sont détectés sans utiliser le schéma de suppression d'interférence lorsque le CINR mesuré ne dépasse pas le CINR seuil, et sont détectés en utilisant le schéma de suppression d'interférence lorsque le CINR mesuré dépasse le CINR seuil.

9. Procédé selon la revendication 5, dans lequel le système de communication présente un facteur de réutilisation de fréquence de 1.

10. Procédé selon la revendication 5, dans lequel le premier niveau MCS est le niveau MCS le plus faible parmi les niveaux MCS pris en charge par la station de base.

11. Procédé selon la revendication 6, dans lequel le premier niveau MCS est le niveau MCS le plus faible parmi les niveaux MCS pris en charge par la station de base.

12. Procédé de transmission d'un signal de liaison descendante par une station de base dans un système de communication, le procédé comprenant les étapes consistant à :
générer un signal de préambule (710) ;
générer des rafales de liaison descendante (740-1, 740-2, 740-3, 740-4, 740-5, 740-6, 740-7, 740-8) en planifiant les données à transmettre dans un intervalle de trame de liaison descendante correspondant ;
allouer les rafales de liaison descendante à une trame de liaison descendante en fonction des niveaux de schéma de modulation et de codage MCS à appliquer aux rafales de liaison descendante ;
générer un message MAP (730) en fonction des rafales de liaison descendante allouées ;
générer un en-tête de contrôle de trame (720) en fonction du message MAP ; et
générer un signal de trame de liaison descendante comprenant le signal de préambule, l'en-tête de contrôle de trame, le message MAP et les rafales de liaison descendante, puis transmettre le signal de liaison descendante ;
**caractérisé en ce que**
les signaux de liaison descendante sont alloués de telle manière que les signaux de liaison descendante sont agencés en fonction d'un domaine de fréquence selon une séquence dans laquelle le signal de liaison descendante ayant le premier niveau MCS est d'abord localisé, puis un signal de liaison descendante dont le niveau MCS montre la plus
petite différence entre ce niveau MCS et le premier niveau MCS est localisé avant de localiser les signaux de liaison descendante restants.

13. Procédé selon la revendication 12, dans lequel les rafales de liaison descendante sont allouées à la trame de liaison descendante de telle manière qu'un signal de liaison descendante auquel est appliqué un premier niveau MCS est d'abord transmis, puis les signaux de liaison descendante sont transmis selon une séquence dans laquelle un signal de liaison descendante dont le niveau MCS montre la plus petite différence entre ce niveau MCS et le premier niveau MCS est transmis avant de transmettre les signaux de liaison descendante restants.

14. Procédé selon la revendication 12, dans lequel le système de communication présente un facteur de réutilisation de fréquence de 1.

15. Procédé selon la revendication 12, dans lequel le premier niveau MCS est le niveau MCS le plus faible parmi les niveaux MCS pris en charge par la station de base.

16. Procédé de réception d'un signal de liaison descendante par une station de base dans un système de communication, le procédé comprenant les étapes consistant à :
recevoir un signal de trame de liaison descendante comprenant un signal de préambule (710), un en-tête de contrôle de trame (720), un message MAP (730) et une pluralité de rafales de liaison descendante (740-1, 740-2, 740-3, 740-4, 740-5, 740-6, 740-7, 740-8),
détecter un état de canal à partir du signal de préambule ;
**caractérisé par**
la détection de l'en-tête de contrôle de trame (720) et du message MAP (730) en déterminant s'il faut utiliser ou non un schéma de suppression d'interférence conformément à l'état du canal ;
dans lequel, dans le signal de trame de liaison descendante, les signaux de liaison descendante sont agencés en fonction d'un domaine de fréquence selon une séquence dans laquelle le signal de liaison descendante ayant le premier niveau MCS est d'abord localisé, puis un signal de liaison descendante dont le niveau MCS montre la plus petite différence entre ce niveau MCS et le premier niveau MCS est localisé avant de localiser les signaux de liaison descendante restants.

17. Procédé selon la revendication 16, dans lequel le signal de trame de liaison descendante est généré en transmettant un signal de liaison descendante auquel un premier niveau MCS est appliqué, puis en transmettant les signaux de liaison descendante selon une séquence dans laquelle un signal de liaison descendante ayant un niveau MCS montrant la plus petite différence entre ce niveau MCS et le premier niveau MCS est transmis avant de transmettre les signaux de liaison descendante restants.

18. Procédé selon la revendication 16, dans lequel l'état du canal est détecté en mesurant un rapport porteuse à interférence plus bruit CINR.

19. Procédé selon la revendication 18, dans lequel les signaux de liaison descendante sont détectés sans utiliser le schéma de suppression d'interférence lorsque le CINR mesuré ne dépasse pas le CINR seuil, et sont détectés en utilisant le schéma de suppression d'interférence lorsque le CINR mesuré dépasse le CINR seuil.

20. Procédé selon la revendication 16, dans lequel le système de communication présente un facteur de réutilisation de fréquence de 1.

21. Procédé selon la revendication 17, dans lequel le premier niveau MCS est le niveau MCS le plus faible parmi les niveaux MCS pris en charge par la station de base.

22. Procédé selon la revendication 16, dans lequel le premier niveau MCS est le niveau MCS le plus faible parmi les niveaux MCS pris en charge par la station de base.
